# EUROPEAN PATENT APPLICATION

(11) **EP 4 621 651 A1**
(43) Date of publication of application: **24.09.2025**
(21) Application number: 24165298.1
(22) Date of filing: 21.03.2024
(51) Int. Cl.: G06N 3/0475, G06N 3/10, G06N 5/022, G06F 40/00

(54) **METHOD FOR OBTAINING AN AI AGENT, METHODS FOR USAGE OF SAID AI AGENT, CONTROL APPARATUS, AUTOMATION SYSTEM, COMPUTER-READABLE MEDIUM, AND COMPUTER PROGRAM PRODUCT**

(71) Applicant: ABB SCHWEIZ AG, 5400 Baden (CH)
(72) Inventor: ASHIWAL, Virendra, 68542 Heddesheim (DE); SCHOCH, Nicolai, 69120 Heidelberg (DE); BECKER, Pascal, 76676 Graben-Neudorf (DE)
(74) Representative: Maiwald GmbH

(57) **Abstract**

The present invention relates to a method, for obtaining an artificial intelligence, Al, agent applicable on a drive application. The method comprises obtaining (S310) training data indicative of predetermined drive operational data related to predetermined drive applications and/or of predetermined drive parameters related to the predetermined drive applications. The method further comprises training (S320) a large language model-, LLM-, based generative Al agent using the obtained training data to identify at least one of the following: first drive parameters related at least partly to the drive application, and relationships among the first drive parameters.

## Description

### FIELD OF THE INVENTION

The invention relates to a method for obtaining an artificial intelligence, Al, agent. The invention further relates to methods for usage of said Al agent. The invention still further relates to a control apparatus, an automation system, a computer-readable medium, and a computer program product.

### BACKGROUND

Machine learning, ML, algorithm execution and deployment relies on data engineers and data scientists. Therefore, data engineers and data scientists not only require ML/Analytics experience but also deep system and domain knowledge. Hence, data engineers and data scientists are confronted with increasingly complex tasks and have developed to become a crucial key element for successful drive analytics applications. However, availability and capacity of data engineers and data scientists may be limited, for example. Hence, there is room for improvement.

### SUMMARY

Until today, there have been lots of development, various products, and services for supporting data analytics operations and algorithms for motion application. Operational drive data and their relations, ML algorithms based on those data, and data engineers as well as data scientists who develop those ML algorithms and applications are key elements for a successful drive analytics application. Among these key elements, data engineers as well as data scientists are crucial as they are bound to have a deep understanding of drive installation, drive parameters, operation scenarios, application uses, and generated drive data. However, data engineers as well as data scientists have physical limitations, since they may not be available every day and at all times, for example, may not be fully focused when available, and may not achieve an ideally optimized ML algorithm execution. Hence, these limitations reflect in drive analytics applications and their outcome for motion application. As a result, a full utilization of data analytics application to improve motion operations may not be achieved. Moreover, if well trained data engineers or data scientists leave an application or project, there is a high learning curve for new data engineers or data scientists to take in order to achieve a same level of performance as the left data engineers or data scientists. Such training of new data engineers or data scientists is a time-consuming and resource-intensive task. Likewise, requirement of expert knowledge is also needed for commissioning of drive applications and for identifying optimal drive parameters for such drive applications. These processes are also time consuming and resource-intensive. Furthermore, once a drive application is in operation, handling future errors may also need human expertise.

In view of the above, to address one or more of these concerns, there is provided, in a first aspect, a method for obtaining an artificial intelligence agent, Al agent, applicable on a drive application. The method comprises obtaining training data indicative of predetermined drive operational data related to predetermined drive applications and/or of predetermined drive parameters related to the predetermined drive applications. The method further comprises training a large language model-, LLM-, based generative Al agent using the obtained training data to identify first drive parameters related at least partly to the drive application, and/or to identify relationships among the first drive parameters.

It shall be noted that the method may be a method for obtaining an Al agent applicable on a drive application in an industrial drive application system. The Al agent may be an AI agent in an industrial drive application system and/or related to an industrial drive application system.

It shall be noted that by the term "drive application" as used throughout this application, it is also meant to be covered a drive apparatus and/or a drive (control) system. A drive apparatus, for example, may be a motor, wherein a drive (control) system, for example, may be a system which comprises the motor and which comprises a further drive apparatus.

It shall further be noted that the expressions "predetermined drive operational data", "predetermined drive applications", and "predetermined drive parameters" may be understood in that the drive operational data, drive applications and drive parameters are predetermined, preselected, prepared and/or preadjusted for the training, i.e. so that suitable, applicable and/or appropriate training data are obtainable.

Regarding the training data, it should be noted that the training data may be obtained from real drive applications and/or may be synthetically developed. For example, the training data may be indicative of a historic operation of the drive application, wherein the corresponding historic operational data are obtained from a database or historic database. Additionally or alternatively, synthetically developed data may represent data generated by another Al, a tool, and/or a human, for example. For example, the synthetically developed data may be indicative of simulation data according to which an operation of the drive application is simulated.

It shall be noted that the first drive parameters may be understood to represent a set of drive parameters.

Regarding the relationships among the first drive parameters, the relationship may indicate, for example, how one drive parameter of the first drive parameters influences another one drive parameter of the first drive parameters. For example, the larger a value of the one drive parameter may be, the larger (or smaller) a value of the another one drive parameter would be. Hence, a relationship may be indicative of any proportionality, dependency and/or correlation, or any combination thereof, for example. For example, a value of drive parameter "A" may be directly proportional to a value of drive parameter "B". Hence, increasing the value of the drive parameter "A" may also result in an increase of the value of the drive parameter "B". Further, for example, in case a value of the drive parameter "B" may exceed a predetermined threshold value, a drive parameter "C" is given an upper limit value. For example, in case drive parameter "A" may be indicative of a torque related to a motor, drive parameter "B" may then be indicative of a speed related to the motor and drive parameter "C" may then be indicative of a power supply related to the motor.

The AI agent obtainable according to the method according to the first aspect is advantageous, in that it may enable to complete tasks, generate new tasks based on obtained results, and prioritize tasks in real-time. Such AI agent may further demonstrate the potential of Al-powered language models to autonomously perform tasks within various constraints and contexts. Such AI agent may further open a whole new world of applications which are currently done by mainly human with the help of various analytics applications. Human expertise is not always required for drive analytical operation and may thus be used for other tasks. Hence, human expertise as a resource may be used more efficiently. For example, human expertise may be used to design ML models as well as to evaluate models and deployments of the LLM-, based generative AI agent. Moreover, human mistake may be at least reduced, optimization may be increased, and drive and gateway may be operated autonomously. An onboarding of a new employee may be improved since a more-appropriate training may be provided for the new employee. Furthermore, health monitoring, condition monitoring, predictive analytics, just to name a few examples, may be improved, in that it may be more supported, more automated and more autonomous. Such AI agent may enable to obtain synthetic but super close drive parameters which can be used to train further drive ML models. There may be provided help to monitor drive status and operation parameters with respective to a ML model from a pool or repository of ML models. Further, such AI agent may allow for lower operation and monitoring cost, it may enable to reduce overall commissioning time, it may enable to identify optimal drive parameters with reduced time, and/or it may enable to support and guide customers to deal with any future drive errors.

According to several examples of the present disclosure, the obtained training data may comprise historic operational data and/or simulated operational data. Further, the obtained training data may be further indicative of drive technical manuals indicative of second drive parameters related to the drive application. The training may further comprise training to learn about at least one of: first relationships indicative of relationships among at least part of the first drive parameters based on the drive technical manuals, and second relationships indicative of relationships among at least part of the second drive parameters based on the drive technical manuals. The training may further comprise training to develop methods for identifying drive parameters related at least partly to the drive application based on at least one of the first relationships and the second relationships.

It shall be noted that the second drive parameters may be understood to represent a set of drive parameters. The second drive parameters may be different from the first drive parameters, may have a certain overlap of at least one same drive parameter with the first drive parameters; or may be the same as the first drive parameters. For example, it may be assumed herewith for explanation purposes only that the first drive parameters comprise the drive parameters "A", "B", and "C". Further, from drive technical manuals, there may be derivable second drive parameters, which may comprise the drive parameters "B", "D", and "E". Further, the training may also be understood to comprise to learn about relationships among the first drive parameters and the second drive parameters. For example, how the drive parameters "A" and "C" are related to the drive parameters "D" and "E".

Hence, the identification of potentially ideal or potentially optimal drive parameters is even further improved. In particular, since drive technical manuals are used for obtaining corresponding drive parameters, the training may be even more specified on a certain drive application, i.e. the drive application to which a drive technical manual belongs.

Moreover, there is provided, in a second aspect, a method for achieving a goal for a drive application by use of an AI agent. The method comprises using a large language model-, LLM-, based generative AI agent obtained according to the method according to the first aspect. The method further comprises prompting the LLM-based generative AI agent with the goal to be achieved for the drive application. The method further comprises providing to the LLM-based generative AI agent access to drive parameters related at least partly to the drive application and/or access to operational data related at least partly to the drive application. The method further comprises providing to the LLM-based generative AI agent access to predetermined tools and/or predetermined structured representations for analyzing the drive parameters. The method still further comprises receiving a first output from the LLM-based generative AI agent, wherein the first output is indicative of at least one solution to achieve the goal and/or of at least an information indicating that the goal for the drive application is achieved.

It shall be noted that the method may be a method for achieving a goal for a drive application by use of an AI agent in an industrial drive application system. The AI agent may be an AI agent in an industrial drive application system and/or related to an industrial drive application system.

It shall be noted that with the expression "providing access" to drive parameters, operational data, predetermined tools and/or predetermined structured representations may be understood in that the LLM-based generative AI agent is enabled to obtain these data, information and/or tools, for example from a database or a corresponding repository.

The predetermined tools and/or predetermined structured representations may be understood the represent predetermined, preselected, prepared and/or preadjusted tools and/or structured representations.

A tool may represent a certain computer software or a sensor, for example. For example, a computer software for determining or predicting a load to occur in a motor due to a certain torque and/or a sensor for measuring the load.

Structured representations may be understood to represent any type of written or textual information, of graphical or pictorial information or a combination thereof, for example.

The method is advantageous, in that it may enable to complete tasks, generate new tasks based on obtained results, and prioritize tasks in real-time. The method may further demonstrate the potential of Al-powered language models to autonomously perform tasks within various constraints and contexts. The method may further open a whole new world of applications which are currently done by mainly human with the help of various analytics applications. Human expertise is not always required for drive analytical operation and may thus be used for other tasks. Hence, human expertise as a resource may be used more efficiently. For example, human expertise may be used to design ML models as well as to evaluate models and deployments of the LLM-, based generative AI agent. Moreover, human mistake may be at least reduced, optimization may be increased, and drive and gateway may be operated autonomously. An onboarding of a new employee may be improved since a more-appropriate training may be provided for the new employee. Furthermore, health monitoring, condition monitoring, predictive analytics, just to name a few examples, may be improved, in that it may be more supported, more automated and more autonomous. The method may enable to obtain synthetic but super close drive parameters which can be used to train further drive ML models. There may be provided help to monitor drive status and operation parameters with a respective ML model from a pool or repository of ML models Further, the method may allow for lower operation and monitoring cost, it may enable to reduce overall commissioning time, it may enable to identify optimal drive parameters with reduced time, and/or it may enable to support and guide customers to deal with any future drive errors.

According to several examples of the present disclosure, the method may further comprise providing feedback on the received first output to the LLM-based generative AI agent. The method may further comprise receiving a second output from the LLM-based generative AI agent based on the feedback, wherein the second output is indicative of an information indicating that the goal for the drive application is achieved.

The feedback may be understood to represent drive feedback and/or drive operation feedback, in terms of operational data and/or drive parameters, for example. Moreover, it shall be noted that such feedback from drive, drive application and/or human expert back to the LLM-based generative AI agent may be a continuous learning until a target goal, provided via prompt for example, based on an output from the LLM-based generative AI agent is received. It may be known whether such target goal is achieved or not based on monitoring drive parameters and/or drive application operational data related to the drive application being monitored. Hence, the second output may be understood to represent the drive parameters and/or the drive application operational data for being monitored.

Unsing feedback may allow to further improve the achievement of the goals.

According to several examples of the present disclosure, the method may further comprise providing to the LLM-based generative AI agent direct access to the drive application and/or indirect access to the drive application.

Hence, the LLM-based generative AI agent may be used in relation to a cloud application. Thus, a variety of different application cases onto which the LLM-based generative AI agent may be applied, is further increased. Based on the direct access, individual usage of the LLM-based generative AI agent is further supported.

According to several examples of the present disclosure, the prompting may comprise prompting the LLM-based generative AI agent with the goal to support in commissioning of the drive application. Additionally or alternatively, prompting with the goal to identify optimal drive parameters for the drive application. Additionally or alternatively, prompting with the goal to support in diagnosing drive errors in operation of the drive application. Additionally or alternatively, prompting with the goal to identify an optimal machine learning, ML, model to be applied on the drive application.

Hence, the LLM-based generative AI agent may enable to achieve several different goals, and to achieve these goals even more efficiently.

According to several examples of the present disclosure, the prompting may comprise prompting the LLM-based generative AI agent via a human-machine interface and/or via a prompt wizard interface and/or via LLM programming in automatic way.

Hence, interaction with the LLM-based generative AI agent is provided in an easy manner.

According to several examples of the present disclosure, the providing of access to the predetermined tools and/or predetermined structured representations may comprise providing of access to at least one of:
at least one predetermined ML model and/or at least one predetermined motion analytics ML model,
gateway and/or drive,
environmental conditions,
a human-machine interface,
a database,
prompt templates,
technical manuals,
previous and/or historic drive operational data and corresponding previous and/or historic drive parameters,
values provided by sensors and/or actuators related to the drive application and/or a drive system,
drive logs,
at least one of capabilities, parameters and operating instructions related to the predetermined tools and/or to a single tool among the predetermined tools,
tools for handling noisy and/or incomplete data, and
tools from motion analytics applications.

Hence, the LLM-based generative AI agent may use a huge variety of different input. Thus, the LLM-based generative AI agent is enabled to identify several solutions for achieving a certain goal with higher reliability and/or with higher diversity.

According to several examples of the present disclosure, the providing of access to the predetermined tools may comprise providing the access to describe at least one of the following for a tool among the predetermined tools:
a name of the tool,
a capability of the tool,
how to access the tool,
constraints while using the tool,
input and/or output parameters related to the tool, and their syntax, and
a ML model repository comprising ML models in markup language format.

Hence, usage of the predetermined tools is increased in efficiency.

Moreover, there is provided, in a third aspect, a method for supporting achievement of a goal for a drive application by use of an artificial intelligence, Al, agent obtained according to the method according to the first aspect. The method comprises obtaining a prompt with the goal to be achieved for the drive application. The method further comprises obtaining access to drive parameters generated by the drive application. The method further comprises obtaining access to predetermined tools and/or predetermined structured representations for analyzing the drive parameters. The method further comprises, based on the obtained prompt and based on the obtained accesses, accessing tools and/or structured representations among the predetermined tools and/or the predetermined structured representations. The method further comprises, based on the accessing, creating planning for identifying at least one solution to achieve the goal. The method further comprises identifying the at least one solution. The method still further comprises, based on a result of the identifying, providing an output indicative of the at least one solution and/or executing a solution among the at least one solution.

It shall be noted that the method may be a method for supporting achievement of a goal for a drive application in an industrial drive application system.

The method is advantageous, in that it may enable to complete tasks, generate new tasks based on obtained results, and prioritize tasks in real-time. The method may further demonstrate the potential of Al-powered language models to autonomously perform tasks within various constraints and contexts. The method may further open a whole new world of applications which are currently done by specific analytics applications. Human expertise is not always required for drive analytical operation and may thus be used for other tasks. Hence, human expertise as a resource may be used more efficiently. For example, human expertise may be used to design ML models as well as to evaluate models and deployments of the LLM-, based generative AI agent. Moreover, human mistake may be at least reduced, optimization may be increased, and drive and gateway may be operated autonomously. An onboarding of a new employee may be improved since a more-appropriate training may be provided for the new employee. Furthermore, health monitoring, condition monitoring, predictive analytics, just to name a few examples, may be improved, in that it may be more supported, more automated and more autonomous. The method may enable to obtain synthetic but super close drive parameters which can be used to train further drive ML models. There may be provided help to monitor best suitable drive parameters with respective ML model from a pool or repository of ML models. Further, the method may allow for lower operation and monitoring cost, it may enable to reduce overall commissioning time, it may enable to identify optimal drive parameters with reduced time, and/or it may enable to support and guide customers to deal with any future drive errors.

According to several examples of the present disclosure, the executing may comprise deploying a machine learning, ML, algorithm selected by the AI agent during the creating and/or the identifying. Additionally or alternatively, the executing may comprise deploying drive parameters selected by the AI agent during the creating and/or the identifying on the drive application and/or in commissioning of the drive application. Additionally or alternatively, the executing may comprise resolving a drive error related to the operation and/or the commissioning of the drive application. Additionally or alternatively, the executing may comprise managing a drive application in offline mode for a predetermined time.

Hence, increased efficiency and/or increased reliability is provided for several to be executed tasks.

According to a fourth aspect, there is provided a control apparatus for a drive application, the control apparatus being configured to carry out the above-outlined method of the first aspect, the second aspect and/or the third aspect.

The control apparatus is advantageous, in that it may enable to complete tasks, generate new tasks based on obtained results, and prioritize tasks in real-time. The control apparatus may further demonstrate the potential of Al-powered language models to autonomously perform tasks within various constraints and contexts. The control apparatus may further open a whole new world of applications which are currently done by specific analytics applications. Human expertise is not always required for drive analytical operation and may thus be used for other tasks. Hence, human expertise as a resource may be used more efficiently. For example, human expertise may be used to design ML models as well as to evaluate models and deployments of the LLM-, based generative AI agent. Moreover, human mistake may be at least reduced, optimization may be increased, and drive and gateway may be operated autonomously. An onboarding of a new employee may be improved since a more-appropriate training may be provided for the new employee. Furthermore, health monitoring, condition monitoring, predictive analytics, just to name a few examples, may be improved, in that it may be more supported, more automated and more autonomous. The control apparatus may enable to obtain synthetic but super close drive parameters which can be used to train further drive ML models. There may be provided help to monitor best suitable drive parameters with respective ML model from a pool or repository of ML models. Further, the control apparatus may allow for lower operation and monitoring cost, it may enable to reduce overall commissioning time, it may enable to identify optimal drive parameters with reduced time, and/or it may enable to support and guide customers to deal with any future drive errors.

According to a fifth aspect, there is provided an automation system comprising a first control apparatus according to the fourth aspect and a second control apparatus according to the fourth aspect, the first control apparatus configured to carry out the method of the second aspect, the second control apparatus configured to carry out the method of the third aspect, and wherein the first control apparatus and the second control apparatus are communicatively connected.

Such automation system is advantageous, in that it may allow for lower operation and monitoring cost, may enable to reduce overall commissioning time, may enable to identify optimal drive parameters with reduced time, and/or may enable to support and guide customers to deal with any future drive errors. Human mistake may at least be reduced, automation may be increased, and human expertise as a resource may be used more efficiently.

According to a sixth aspect, there is provided a computer-readable medium comprising instructions which, when executed by a computing system, cause the computing system to perform the method of the first aspect, of the second aspect, and/or of the third aspect. The computer-readable medium may be transitory or non-transitory, volatile or non-volatile.

Such computer-readable medium is advantageous, in that it may allow for lower operation and monitoring cost, may enable to reduce overall commissioning time, may enable to identify optimal drive parameters with reduced time, and/or may enable to support and guide customers to deal with any future drive errors. Human mistake may at least be reduced, automation may be increased, and human expertise as a resource may be used more efficiently.

According to a seventh aspect, there is provided a computer program product comprising instructions which, when executed by a computing system, enable or cause the computing system to perform the method of the first aspect, of the second aspect, and/or of the third aspect.

Such computer program product is advantageous, in that it may allow for lower operation and monitoring cost, may enable to reduce overall commissioning time, may enable to identify optimal drive parameters with reduced time, and/or may enable to support and guide customers to deal with any future drive errors. Human mistake may at least be reduced, automation may be increased, and human expertise as a resource may be used more efficiently.

According to an eight aspect, there is provided a computing system configured to perform the method of the first aspect, second aspect and/or third aspect.

Such computing system is advantageous, in that it may allow for lower operation and monitoring cost, may enable to reduce overall commissioning time, may enable to identify optimal drive parameters with reduced time, and/or may enable to support and guide customers to deal with any future drive errors. Human mistake may at least be reduced, automation may be increased, and human expertise as a resource may be used more efficiently.

The method of the first aspect, second aspect and/or third aspect may be computer implemented.

Optional features of the first aspect, second aspect and/or third aspect may form part of any of the third to eight aspects, mutatis mutandis.

By "automation system", according to several examples, it may also be meant an "industrial automation system", a "drive application system" or an "industrial drive application system", which may comprise and/or be associated with a ski lift system or a ship application, for example.

The term "obtaining", as used herein, may comprise, for example, receiving from another system, device, or process; receiving via an interaction with a user; loading or retrieving from storage or memory; measuring or capturing using sensors or other data acquisition devices.

The term "determining", as used herein, encompasses a wide variety of actions, and may comprise, for example, calculating, computing, processing, deriving, investigating, looking up (e.g., looking up in a table, a database or another data structure), ascertaining, and the like. Also, "determining" may comprise receiving (e.g., receiving information), accessing (e.g., accessing data in a memory), and the like. Also, "determining" may comprise resolving, selecting, choosing, establishing and the like.

The indefinite article "a" or "an" does not exclude a plurality. In addition, the articles "a" and "an" as used herein should generally be construed to mean "one or more" unless specified otherwise or clear from the context to be directed to a singular form.

Unless specified otherwise, or clear from the context, the phrases "one or more of A, B and C", "at least one of A, B, and C", and "A, B and/or C" as used herein are intended to mean all possible permutations of one or more of the listed items. That is, the phrase "A and/or B" means (A), (B), or (A and B), while the phrase "A, B, and/or C" means (A), (B), (C), (A and B), (A and C), (B and C), or (A, B, and C).

The term "comprising" does not exclude other elements or steps. Furthermore, the terms "comprising", "including", "having" and the like may be used interchangeably herein.

The invention may include one or more aspects, examples or features in isolation or combination whether specifically disclosed in that combination or in isolation. Any optional feature or sub-aspect of one of the above aspects applies as appropriate to any of the other aspects.

The above-described aspects will become apparent from, and elucidated with, reference to the detailed description provided hereinafter.

### BRIEF DESCRIPTION OF THE DRAWINGS

A detailed description will now be given, by way of example only, with reference to the accompanying drawing, in which:
- Figure 1 schematically illustrates an example of a use case for application of an LLM-based generative AI agent according to several examples of the present disclosure;
- Figure 2 schematically illustrates an example of a use case for application of an LLM-based generative AI agent according to several examples of the present disclosure;
- Figure 3 illustrates a flowchart indicative of a method according to several examples of the present disclosure;
- Figure 4 illustrates a flowchart indicative of a method according to several examples of the present disclosure; and
- Figure 5 illustrates a flowchart indicative of a method according to several examples of the present disclosure.

### DETAILED DESCRIPTION

•According to several examples, data is being generated by drives. These data are then collected over various communication protocols and stored in a database, for example a cloud-based database. Then a data engineer and/or data scientist will use these stored data to develop various ML algorithms. Further, the data engineer may split the ML model in two parts, for example, where the first part would deploy and run directly at drive, in sandbox environment for example, and the second part would deploy and run at gateway, at NGGW for example. The drive-deployed ML model part sends processed data to the subsequent gateway-deployed ML model part. In order to do this split, various devices are utilized, like drive and NGGW constraints and/or drive CPU load, for example. This whole process of splitting and deployment is done with the help of human, in a guided workflow or wizard, for example, and it heavily relies on the human expertise. Data generated by devices, like drive, motors and/or sensors on board, for example, are collected and available as dump, but there is still room of their optimized process and uses. Various tooling infrastructure is available, however, there is huge potential in an optimal integration of this various tooling infrastructure with existing ML models and uses. For example, drift detection and its mitigation is a challenge in operation of a ML algorithm. Another task that demands human expertise is the commissioning of drive systems, for example, and the identifying of potentially optimal parameters for the drive system. For a same drive, for example, its optimal parameters can be different for its different use cases. Therefore, there are many factors which may play a crucial role in the identification of optimal parameters for drives for their applications. Moreover, in case of errors in a drive system, current practice is to look for a solution online, because a solution may be found faster as compared to reading technical manual or contacting an expert. Therefore, the drive application to identify its optimal parameters and/or to resolve any operation errors heavily depends on human expertise.

An artificial intelligent, Al, Agent having access to previous deployments and having an understanding of available tools, like analytics algorithms for example, could support a human expert in his/her task of commissioning and monitoring a drive system application, or may even have a better historic memory than a human worker. Moreover, an AI Agent is able to combine historic events even though these events are not obviously related.

According to the present disclosure, a LLM-based generative AI Agent for motion business is provided. Execution and scheduling of existing motion data analytics solutions fully rely on human intervention. However, humans are not fully available 24 hours a day and not every day during system commissioning and runtime. Therefore, there is a need for analytics algorithms, for example for monitoring and predictive analytics, and a gap in real-time monitoring about how well these analytics algorithms are working. It shall be noted that drives provide a huge amount of data dump, these data are being analysed by various tools and/or dashboards available in an ecosystem. However, there is still huge potential in optimizing a usage of these tools to get insights and, thus, to use these tools along with execution and scheduling of data analytics applications to get, ideally, the best of all for motion applications. Therefore, there is shown in the present disclosure a generative Al-based AI Agent which is enabled to reason, plan and/or act in order to fulfil a given goal via prompts by using drive data, at least one of available various tools, and/or at least one of various ML models.

Accordingly, there is disclosed a large language model-, LLM-, based generative AI agent according to several examples of the present disclosure. The LLM-based generative AI agent further automates the splitting, optimization, and deployment of analytics and ML algorithms in resource-constraint edge and device environments or parts thereof, for example also without splitting.

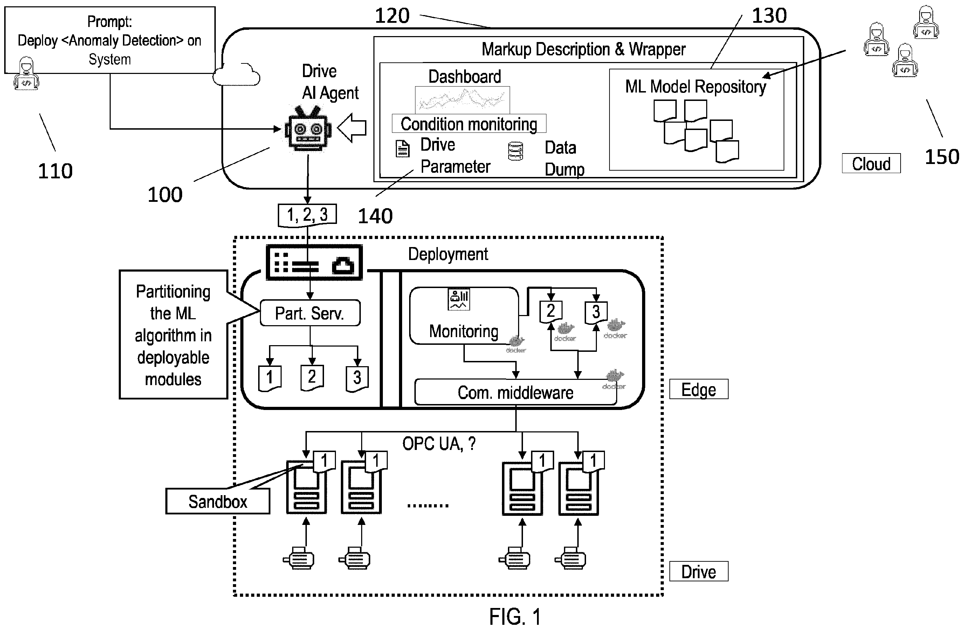

Referring now to Figure 1, Figure 1 schematically illustrates an example of a use case for application of the LLM-based generative AI agent according to several examples of the present disclosure.

The LLM-based generative AI agent or, as named in the following and as shown in Figure 1, DriveAlAgent 100 enables an automatic splitting, optimization, and deployment of analytics and ML algorithms in resource-constraint edge and device environments or in parts thereof, for example also without splitting. It shall be noted with reference to Figure 1 that it is shown a specific use case, but there may be many use cases for the same DriveAlAgent 100. Hence, there is a one to many use-case-mapping kind of setup. I.e. one DriveAlAgent 100 may be mapped on several use cases. Moreover, a work or a task to be performed by one DriveAlAgent 100 may be divided upon several DriveAlAgents 100. Several DriveAlAgents 100 may work or may be used in parallel. One DriveAlAgent 100 may be applied on one drive application. However, also several DriveAlAgents 100 may be applied on one same drive application. Hence, there may also be a many to many use-case-mapping kind of setup.

The DriveAlAgent 100 as disclosed according to several examples of the present disclosure is based on an Al agent which is based on (1) LLMs, (2) a set of well-described analytics tools for MO drive system analytics, and on (3) a kind of agent memory.

The LLM may be understood to be part of the Al agent's brain. The LLM is responsible for understanding the Al agent's environment, for generating responses, and for making decisions. The LLM is typically trained on a large dataset of text and code.

Access to the well-described analytics tools or tools enables the Al agent to access resources which may also comprise external resources, the resources such as databases, values of sensors like the drives for example, and/or actuators and their added values. This allows the Al agent to interact with the Al agent's environment and to take actions to achieve the Al agent's goals.

The memory of the Al agent may be understood as the Al agent's storage. The storage stores the Al agent's knowledge, experiences, and goals. The memory can be short-term and/or long-term. Short-term memory is used to store the Al agent's current state, while long-term memory is used to store the Al agent's past experiences.

The DriveAlAgent 100 is LLM-based fine-tuned on drive operational data, therefore DriveAlAgent 100 knows how drive works, the drive's various parameters or drive parameters, and a relation among these drive parameters. With this solution, an operator 110 can prompt the DriveAlAgent 100 with wizard, chat interface, and/or via LLM programming in automatic way, for example, with a defined or predetermined goal which the operator 110 wants to achieve for a dedicated or predetermined drive application. Such operator 110 does not need to be a well expert in drive parameters and/or in the drive parameters' intertwined relations, neither does the operator 110 needs to know what tools are available and how these tools can be used for achieving the predetermined goal. The DriveAlAgent 100 will take such input, i.e. the predetermined goal, as prompt from the operator 110, and creates several tasks thereof based on the DriveAlAgent's 100 reasoning and planning capability.

Based on these tasks, the DriveAlAgent 100 may require access to various tools which can help the DriveAlAgent 100 to achieve these tasks. The DriveAlAgent 100 as illustrated in Figure 1 will go through a markup description file, like a markup description and wrapper 120 as illustrated in Figure 1 for example, which contains a list of available tools, including access to available ML models, which are stored in an ML model repository 130, for example, the capability of these tools, parameters or drive parameters 140, and operating instructions. Based on this file, the DriveAlAgent 100 may identify suitable or required tools for achieving the predetermined goal. However, it shall be noted that the DriveAlAgent 100 may not necessarily go through the markup description file or the markup description and wrapper 120 as illustrated in Figure 1, but may use any means which enables the DriveAlAgent 100 to obtain such information as obtainable from the markup description and wrapper 120.

Then, with the DriveAlAgent 100 knowing the suitable or required tools, the DriveAlAgent 100 will create planning. Once planning is ready, the DriveAlAgent 100 may find an optimized solution or several solutions, since the DriveAlAgent 100 may propose several solutions for achieving the predetermined goal, and provide it as output to the operator 110, for example in natural language.

The operator 110 can go through this output and may decide if to agree or not to agree to the provided solution(s). Once the operator 110 agrees, DriveAlAgent 100 may execute a solution upon which agreement has been found, accordingly. When the predetermined goal is achieved, the DriveAlAgent 100 will inform the operator 110.

In more detail, the DriveAlAgent 100 is a LLM-based generative AI agent. Existing LLM are used and fine-tuned with drive operational data and drive parameters. Hence, the DriveAlAgent 100 may become an expert to understand real-time drive parameters. Since the DriveAlAgent 100 may monitor drive in real time, the DriveAlAgent 100 may need to be provided to have access to generated drive parameters comprising historic drive parameters and/or previously generated drive parameters. The DriveAlAgent 100 may further need access to additional tools which can provide value added insights from the generated drive parameters. Access to such tools may be provided in such way, for example as markup language, which describes at least one of the following from a tool:
- the name of a tool;
- a capability of a tool;
- how to access a tool;
- constraints while using a tool;
- input and/or output parameters as well as their syntax; and
- a ML model repository 130, so that along with tools, the DriveAlAgent 100 has also has access to a repository containing ML models, optionally in same markup language format with information from several tools.

According to several examples of the present disclosure, the following is to be considered for use of deployment of a ML algorithm. Namely, the DriveAlAgent 100 has the necessary elements to do autonomous splitting, optimizing, and deploying of analytics and ML algorithms to edge and drive, respectively. Now, the DriveAlAgent 100 waits for an operator 110 to input as prompt, which the DriveAlAgent 100 will take as a goal, what the operator 110 wants to achieve with a particular edge-drive setup application.

As an example, with reference to Figure 1, an operator 110 may prompt to the DriveAlAgent 100 to deploy anomaly detection on a drive system, for example for a motor. The DriveAlAgent 100 may then acquire relevant information and tools to achieve this goal. For example, the DriveAlAgent 100 acquires a ML model from the ML Model Repository 130 which is suitable for anomaly detection at a motor. Further, the DriveAlAgent 100 obtains a tool, which is suitable for preprocessing operational data of the drive system, for example, since such pre-processed data facilitate an anomaly detection, for example. The pre-processed data may be pre-processed torque values. Further, the DriveAlAgent 100 acquires relevant drive parameters, for example such drive parameters as indicated in the obtained ML model or in the obtained tool. The DriveAlAgent 100 may also determine which drive parameters to acquire based on monitoring historic and/or current conditions of the motor. Then, when the DriveAlAgent 100 has "collected" all the information and tools required, for deployment, the DriveAlAgent 100 may partition a ML algorithm for anomaly detection on a drive system into several, for example three, deployable modules. At least one of these modules, for example module 1 in Figure 1, may be forwarded to drive, for example in or into a sandbox environment. The forwarding may be via OPC UA, for example. The remaining modules, for example modules 2 and 3 in Figure 1, remain at edge for enabling a monitoring from edge to drive. At the elements "Monitoring", "2", "3" and "Com. middleware" on Edge in Figure 1, an illustrative element for indicating "docker" is provided.

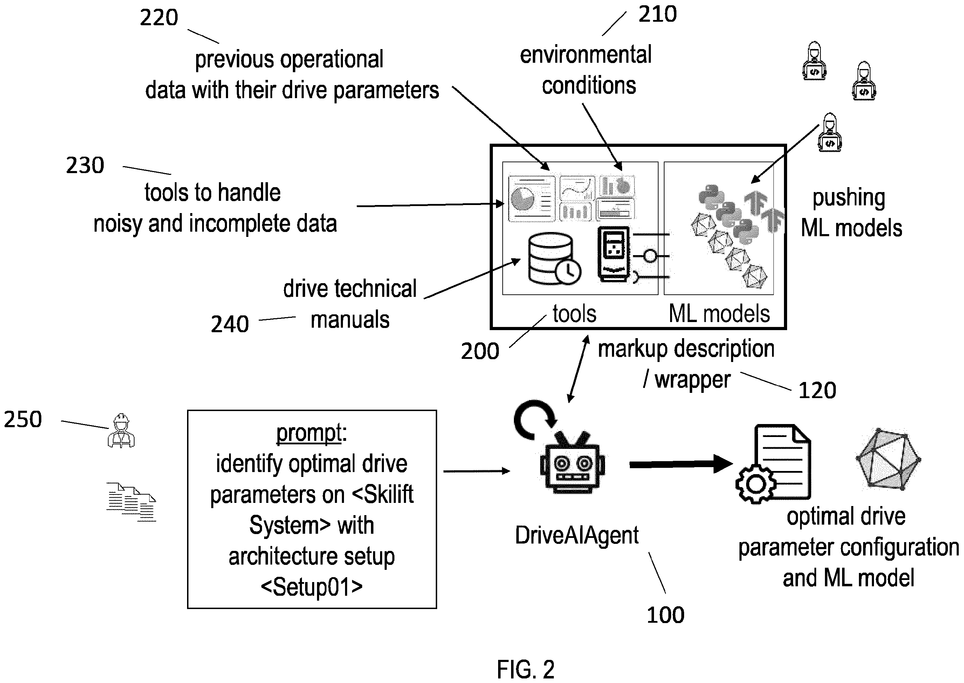

According to several examples of the present disclosure, with reference to Figure 2, the following is to be considered for a sample use case of identifying optimal drive parameters. Namely, same as before, the DriveAlAgent 100 has access to required tools 200 like environmental conditions 210, previous operational data with their drive parameters 220, tools to handle noisy and incomplete data 230, and drive technical manuals 240. Therefore, based on these tools 200, the DriveAlAgent 100 can support in commissioning and can identify optimal drive parameters. Further, in case of any drive errors in operation, based on drive logs and various of data associated with the drive logs, which may be analysed by a ML algorithm, the DriveAlAgent 100 can support an operator 110 in diagnosing.

As an example with reference to Figure 2, for example, an operator 250 prompts the DriveAlAgent 100 to identify optimal drive parameters on a drive system being a ski lift system, for example, wherein the ski lift system has a certain architecture setup. Based thereon, the DriveAlAgent 100 will, similar to Figure 1, "collect" all the information and tools required to achieve this goal, and, based on such "collection", will output an optimal drive parameter configuration and a corresponding optimal ML model, as indicated in Figure 2.

It shall be noted that, said in other words, according to one of several examples, drive parameters may be understood as representing constraints and/or restrictions, like a speed range for example, like 50 to 100 rpm for a motor apparatus. In case the motor apparatus will be running, the motor apparatus will be controlled to have a speed within the given speed range, for example a speed of 70 rpm. Such 70 rpm may be understood to represent operational data. Operational data may be understood to represent data representing the actual running application.

It shall further be noted that for commissioning, for examples, hundreds of drive parameters may need to be set and/or adjusted.

According to several examples of embodiments, there are several requirements for the the DriveAlAgent 100 being able to work. For example, the DriveAlAgent 100 will need and work most efficient with the at least one of the following, or respectively subsets thereof, if not all may be providable:
- a fine-tuned LLM on drive operational data,
- various tools from motion analytics applications, like a classifier model, an anomaly detection model, etc., for example,
- access to technical manuals,
- access to previous and/or historic drive parameters based on their uses and environmental conditions,
- access to a repository of motion analytics ML models,
- a markup language syntax through which the tools and ML models can be represented,
- prompt wizard for an operator,
- various prompt templates which should be selected based on an operator input goal, and
- access to gateway and drive.

In the following, according to several examples of the present disclosure, a use case is presented, comprising an automatic splitting and deployment of ML algorithms for an industrial project.

In case of an industrial project, currently the project may be fully depended on a data engineer. Therefore, success of the project's analytical applications developed by the data engineer is fully dependent on the data engineer's knowledge and deep understanding of drive operations, of the driver operation's drive parameters and of a relation among these drive parameters. Additionally, the data engineer also needs additional tools to understand these data, such as a dashboard for example. With the DriveAlAgent 100, required information may be fed into an LLM. The LLM with memory and access to these required information, data, and relationships among supported tooling is better in optimizing to identify a final analytics operation, like a ML algorithm for example, which should be deployed on drive, edge or at both, and should then deploy.

In the following, according to several examples of the present disclosure, a use case is presented, comprising drive parameterization.

Currently, a drive expert is needed for commissioning. Even with that the whole commissioning process is time consuming. Moreover, there is room for improved optimizing to identify drive parameters. The DriveAlAgent 100 will have access to tools and information, such as, for example: previous and/or historic operational data comprising associated drive parameters, tools to handle noisy and incomplete data, and drive technical manuals. With these, the DriveAlAgent 100 can identify potentially optimal drive parameters and can reduce overall commissioning time. The DriveAlAgent 100 can also support an operator to resolve any drive errors.

To support in commissioning and in identifying of optimal drive parameters, the DriveAlAgent 100 can be fine-tuned with drive technical manuals. LLM could be used to understand and process large amounts of structural representations, comprising technical manual, texts, reports and/or research papers, for examples. Research papers may be relevant for development of for new drive parameter identification methods. These data could be used to learn about relationships among different drive parameters and to develop new methods for identifying drive parameters.

Drive parameters are often non-linear and time-varying, so they cannot be easily measured or estimated using traditional methods. These drive parameters are affected by various factors, comprising load, environment, and/or the aging of drive, for example. Further, there is still gap in identifying optimized drive parameters based on available data for training due to noisy and incomplete data.

However, with the DriveAlAgent's 100 deep knowledge about drive operations and drive parameters, data engineers can be freed from this burden. Hence, an experienced expert or data engineer is not required for operation of the DriveAlAgent 100, but an operator 110 can already handle the DriveAlAgent 100. With that, as illustrated in Figure 1, data engineers 150 may focus on developing various ML models which can be deployed to the ML model repository 130 and the ML model repository's 130 use as markup language. As shown in Figure 1, once the DriveAlAgent 100 is fine-tuned with drive related data, an operator 110 can start giving prompt to identify drive parameters. The DriveAlAgent 100 can call various tools as mentioned above when requiring to provide optimal drive parameters along with a suitable ML model.

According to several examples of the present disclosure, at least one of the following advantageous features are shown:
- a largely or fully autonomous realization of a distributed on-premise analytics ecosystem, as a core enabler for thereon-based analytics scenarios comprises anomaly detection, asset health monitoring, etc., for example;
- an autonomous real-time deployment of ML models to gateway and/or drive;
- the overall system consists of the following components and functionalities:
- ML model repository: data analytics engineers 150 who are expert in motion domain, may create ML models and deploy these ML models to this ML model repository 130 so that the DriveAlAgent 100 can deploy one or more of these ML models when needed.
- databases: predetermined and/or historic data obtainable from databases may help the DriveAlAgent 100 to understand previous decisions and previous performances of motion application.
- A tool description, for example a markup description of the tools: with tools and algorithms described, for example by a markup language, for example controlled and/or natural markup language, the DriveAlAgent 100 will understand tools, their capabilities and how to use them when needed.
- a human-machine interface, like dashboards and/or alternative solutions for example: such interface provides value added outcome to the DriveAlAgent 100 and may represent one possible interpretation interface to the DriveAlAgent system.
- QnA interface for prompting and/or controlling the human-machine interface: for the operator 110 to give a goal which the operator 110 wants to achieve from a to-be-DriveAIAgent-controlled motion application.
- prompt templates based on motion applications: based on operator inputs, certain prompt templates can be used so that the DriveAlAgent 100 obtains an improved understanding and can do a structured planning.
- access to tools: the DriveAlAgent 100 may know Drive-GW constraints and actual loads, which the DriveAlAgent 100 can consider while deploying ML on both gateway and drive; and
- applicable also for non-splitted analytics and/or ML solutions.

According to several examples of the present disclosure, at least one of the following use cases may be considered:
- "Hey, AI Agent! - Please do everything needed to monitor this drive and to keep it running smoothly!" Hence, the DriveAlAgent 100 should select from a set of algorithms and/or ML models, a subset which could run in sequence, fully autonomously;
- "Hey, AI Agent! - Please do everything needed to save energy on this drive (system)!" Hence, the DriveAlAgent 100 should investigate which parameters can be tuned to optimize some KPI, and may then do so, accordingly;
- the DriveAlAgent 100 would be very helpful in case where drive and its operation place is not reachable to have continuous human monitoring from days to even months;
- If drive and plant is not online, like on ship or remote for some time like months, for example, then it may be prompted to take care of a drive operation for three months, for example, so the DriveAlAgent 100 can handle such situation in very different ways. These different ways or operating policies can be designed by human;
- Accordingly, several policies on how the DriveAlAgent 100 should operate in normal (e.g. non-isolated) scenario or in such isolated scenario are possible. Several policies may be enforceable. For a remote operation for some months, policies should be different that policies for a normal operation;
- the DriveAlAgent 100 could be used as pools or council of agents, where multiple AlAgents are deployed and take part for a decision and act;
- the DriveAlAgent 100 can be used as Commissioning Co-Pilot, thus helping commissioning engineers; and
- the DriveAlAgent 100 can be used to identify optimal drive parameters.

In the following, further examples according to the present disclosure are shown.

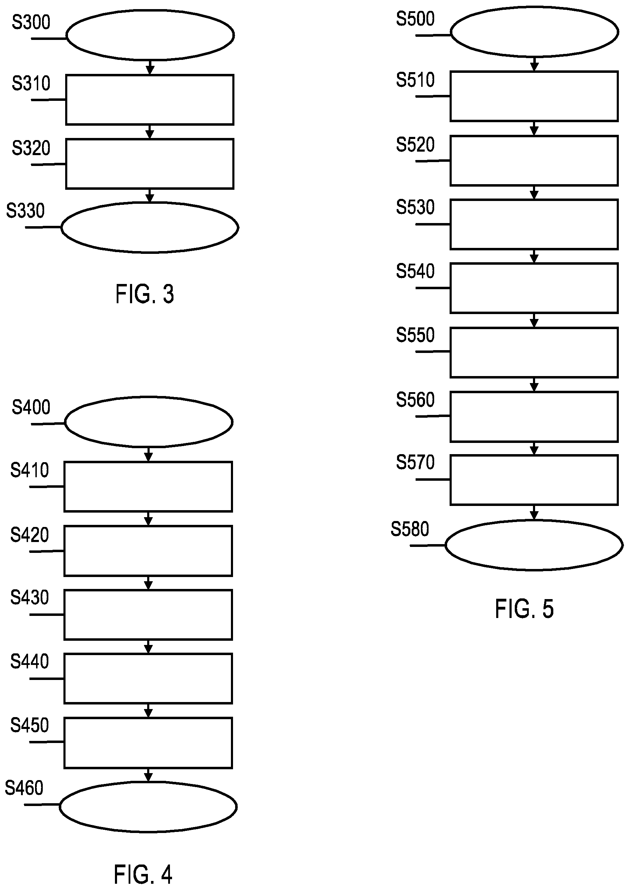

Referring now to Figure 3, there is shown a flowchart of a method for obtaining an artificial intelligence, Al, agent applicable on a drive application, according to several examples of the present disclosure.

The method is started in S300. The method is for obtaining an artificial intelligence, Al, agent, i.e. such DriveAlAgent 100 as outlined above with reference to Figures 1 and 2, applicable on a drive application.

The method comprises, in S310, obtaining training data indicative of predetermined drive operational data related to predetermined drive applications and/or of predetermined drive parameters related to the predetermined drive applications.

Regarding the training data, it should be noted that the training data may be obtained from real drive applications and/or may be synthetically developed. For example, the training data may be indicative of a historic operation of the drive application, wherein the corresponding historic operational data are obtained from a database or historic database. Additionally or alternatively, synthetically developed data may represent data generated by another Al, tools, and/or a human, for example. For example, the synthetically developed data may be indicative of simulation data according to which an operation of the drive application is simulated.

The method further comprises, in S320, training a large language model-, LLM-, based generative AI agent using the obtained training data to identify at least one of the following: first drive parameters related at least partly to the drive application, and relationships among the first drive parameters. The training may be understood to comprise a training, a fine-tuning, and a combination of training and fine-tuning. For example, training or fine-tuning LLM specific for industrial automation or more precisely for industrial drive application use case. The training may be understood to represent a continuous learning, i.e. the LLM-, based generative AI agent continuously improves.

Training as used throughout the present disclosure may comprise a fine-tuning of already existing pre-trained ML models. Moreover, the training may be understood as updating weights.

The method ends in S330.

It shall be noted that such LLM-, based generative AI agent may represent such DriveAlAgent 100 as outlined above with reference to Figures 1 and 2. Moreover, it shall be noted that the method may comprise to train several LLM-, based generative AI agents or several DriveAlAgents 100, which may process tasks in parallel and/or subsequently. The method may also be applicable on multi agent scenarios. Furthermore, the LLM-, based generative AI agent, i.e. the DriveAlAgent 100, may have capability of memory access, planning and reasoning, and may take action accordingly. In addition, the drive application upon which the LLM-, based generative AI agent is applicable may be an industrial drive application.

The AI agent obtainable according to the method according to Figure 3 is advantageous, in that it may enable to complete tasks, generate new tasks based on obtained results, and prioritize tasks in real-time. Such AI agent may further demonstrate the potential of Al-powered language models to autonomously perform tasks within various constraints and contexts. Such AI agent may further open a whole new world of applications which are currently done by specific analytics applications. Human expertise is not always required for drive analytical operation and may thus be used for other tasks. Hence, human expertise as a resource may be used more efficiently. For example, human expertise may be used to design ML models as well as to evaluate models and deployments of the LLM-, based generative AI agent. Moreover, human mistake may be at least reduced, optimization may be increased, and drive and gateway may be operated autonomously. An onboarding of a new employee may be improved since a more-appropriate training may be provided for the new employee. Furthermore, health monitoring, condition monitoring, predictive analytics, just to name a few examples, may be improved, in that it may be more supported, more automated and more autonomous. Such AI agent may enable to obtain synthetic but super close drive parameters which can be used to train further drive ML models. There may be provided help to monitor best suitable drive parameters with respective ML model from a pool or repository of ML models. Further, such AI agent may allow for lower operation and monitoring cost, it may enable to reduce overall commissioning time, it may enable to identify optimal drive parameters with reduced time, and/or it may enable to support and guide customers to deal with any future drive errors.

According to several examples of the present disclosure, the obtained training data may be further indicative of drive technical manuals indicative of second drive parameters related to the drive application. The training may further comprise training to learn about at least one of: first relationships indicative of relationships among at least part of the first drive parameters based on the drive technical manuals, and second relationships indicative of relationships among at least part of the second drive parameters based on the drive technical manuals. The training may further comprise training to develop methods for identifying drive parameters related at least partly to the drive application based on at least one of the first relationships and the second relationships.

It shall be noted that the second drive parameters may be understood to represent a set of drive parameters. The second drive parameters may be different from the first drive parameters, may have a certain overlap of at least one same drive parameter with the first drive parameters; or may be the same as the first drive parameters. For example, it may be assumed herewith for explanation purposes only that the first drive parameters comprise the drive parameters "A", "B", and "C". Further, from drive technical manuals, there may be derivable second drive parameters, which may comprise the drive parameters "B", "D", and "E". Further, the training may also be understood to comprise to learn about relationships among the first drive parameters and the second drive parameters. For example, how the drive parameters "A" and "C" are related to the drive parameters "D" and "E".

It shall be noted that drive parameters may be used to configure drive for a certain application or certain applications. Thus, a task "configuring drive" closes the gap between identifying right drive parameters and their relation with an industrial application which uses an electric motor, for example.

Hence, the identification of potentially ideal or potentially optimal drive parameters is even further improved.

Referring now to Figure 4, there is shown a flowchart of a method for achieving a goal for a drive application by use of an artificial intelligence, Al, agent, according to several examples of the present disclosure.

The method is started in S400.

The method comprises, in S410, using a large language model-, LLM-, based generative AI agent obtained according to the method according to Figure 3.

The method further comprises, in S420, prompting the LLM-based generative AI agent with the goal to be achieved for the drive application.

The method further comprises, in S430, providing to the LLM-based generative AI agent access to drive parameters related at least partly to the drive application and/or access to operational data related at least partly to the drive application.

The method further comprises, in S440, providing to the LLM-based generative AI agent access to predetermined tools and/or predetermined structured representations for analyzing the drive parameters.

The method further comprises, in S450, receiving a first output from the LLM-based generative AI agent, wherein the first output is indicative of at least one solution to achieve the goal and/or of at least an information indicating that the goal for the drive application is achieved. The output may be in natural language, jason, or python code, for example.

The method ends in S460.

It shall be noted that such LLM-, based generative AI agent may represent such DriveAlAgent 100 as outlined above with reference to Figures 1 and 2.

The method is advantageous, in that it may enable to complete tasks, generate new tasks based on obtained results, and prioritize tasks in real-time. The method may further demonstrate the potential of Al-powered language models to autonomously perform tasks within various constraints and contexts. The method may further open a whole new world of applications which are currently done by specific analytics applications. Human expertise is not always required for drive analytical operation and may thus be used for other tasks. Hence, human expertise as a resource may be used more efficiently. For example, human expertise may be used to design ML models as well as to evaluate models and deployments of the LLM-, based generative AI agent. Moreover, human mistake may be at least reduced, optimization may be increased, and drive and gateway may be operated autonomously. An onboarding of a new employee may be improved since a more-appropriate training may be provided for the new employee. Furthermore, health monitoring, condition monitoring, predictive analytics, just to name a few examples, may be improved, in that it may be more supported, more automated and more autonomous. The method may enable to obtain synthetic but super close drive parameters which can be used to train further drive ML models. There may be provided help to monitor best suitable drive parameters with respective ML model from a pool or repository of ML models. Further, the method may allow for lower operation and monitoring cost, it may enable to reduce overall commissioning time, it may enable to identify optimal drive parameters with reduced time, and/or it may enable to support and guide customers to deal with any future drive errors.

According to several examples of the present disclosure, the method may further comprise providing feedback on the received first output to the LLM-based generative AI agent. The method may further comprise receiving a second output from the LLM-based generative AI agent based on the feedback, wherein the second output is indicative of an information indicating that the goal for the drive application is achieved.

Unsing feedback may allow to further improve the achievement of the goals.

According to several examples of the present disclosure, the method may further comprise providing to the LLM-based generative AI agent direct access to the drive application and/or indirect access to the drive application. For example, indirect may mean via software running in a cloud server or cloud application which take the LLM-based generative AI agent's, i.e. the DriveAlAgent's 100 output and then use such output for gateway and/or drive.

Hence, the LLM-based generative AI agent may be used in relation to a cloud application. Thus, a variety of different application cases onto which the LLM-based generative AI agent may be applied, is further increased. Based on the direct access, individual usage of the LLM-based generative AI agent is further supported.

According to several examples of the present disclosure, the prompting may comprise prompting the LLM-based generative AI agent with the goal to support in commissioning of the drive application. Additionally or alternatively, prompting with the goal to identify optimal drive parameters for the drive application. Additionally or alternatively, prompting with the goal to support in diagnosing drive errors in operation of the drive application. Additionally or alternatively, prompting with the goal to identify an optimal machine learning, ML, model to be applied on the drive application.

Hence, the LLM-based generative AI agent may enable to achieve several different goals, and to achieve these goals even more efficiently.

According to several examples of the present disclosure, the prompting may comprise prompting the LLM-based generative AI agent via a human-machine interface and/or via a prompt wizard interface and/or via LLM programming, for example in automatic way.

Hence, interaction with the LLM-based generative AI agent is provided in an easy manner.

According to several examples of the present disclosure, the providing of access to the predetermined tools and/or predetermined structured representations may comprise providing of access to at least one of:
at least one predetermined ML model and/or at least one predetermined motion analytics ML model,
gateway and/or drive,
environmental conditions,
a human-machine interface,
a database,
prompt templates,
technical manuals,
previous and/or historic drive operational data and corresponding previous and/or historic drive parameters,
values provided by sensors and/or actuators related to the drive application and/or a drive system,
drive logs,
at least one of capabilities, parameters and operating instructions related to the predetermined tools and/or to a single tool among the predetermined tools,
tools for handling noisy and/or incomplete data, and
tools from motion analytics applications.

Hence, the LLM-based generative AI agent may use a huge variety of different input. Thus, the LLM-based generative AI agent is enabled to identify several solutions for achieving a certain goal with higher reliability and/or with higher diversity.

According to several examples of the present disclosure, the providing of access to the predetermined tools may comprise providing the access to describe at least one of the following for a tool among the predetermined tools:
a name of the tool,
a capability of the tool,
how to access the tool,
constraints while using the tool,
input and/or output parameters related to the tool, and their syntax, and
a ML model repository comprising ML models in markup language format.

Hence, usage of the predetermined tools is increased in efficiency.

Referring now to Figure 5, there is shown a flowchart of a method for supporting achievement of a goal for a drive application by use of an artificial intelligence, Al, agent obtained according to the method according to Figure 3.

The method starts in S500.

The method comprises, in S510, obtaining a prompt with the goal to be achieved for the drive application.

The method further comprises, in S520, obtaining access to drive parameters generated by the drive application. The drive parameters may be drive parameters for a drive application which was held in past, i.e. the drive parameters may be understood to be previous and/or historic drive parameters.

The method further comprises, in S530, obtaining access to predetermined tools and/or predetermined structured representations for analyzing the drive parameters.

The method further comprises, in S540, based on the obtained prompt and based on the obtained accesses, accessing tools and/or structured representations among the predetermined tools and/or the predetermined structured representations.

The method further comprises, in S550, based on the accessing, creating planning for identifying at least one solution to achieve the goal.

The method further comprises, in S560, identifying the at least one solution.

The method further comprises, in S570, based on a result of the identifying, providing an output indicative of the at least one solution and/or executing a solution among the at least one solution.

The method ends in S580.

It shall be noted that such AI agent may represent such DriveAlAgent 100 as outlined above with reference to Figures 1 and 2.

The method is advantageous, in that it may enable to complete tasks, generate new tasks based on obtained results, and prioritize tasks in real-time. The method may further demonstrate the potential of Al-powered language models to autonomously perform tasks within various constraints and contexts. The method may further open a whole new world of applications which are currently done by specific analytics applications. Human expertise is not always required for drive analytical operation and may thus be used for other tasks. Hence, human expertise as a resource may be used more efficiently. For example, human expertise may be used to design ML models as well as to evaluate models and deployments of the LLM-, based generative AI agent.

Moreover, human mistake may be at least reduced, optimization may be increased, and drive and gateway may be operated autonomously. An onboarding of a new employee may be improved since a more-appropriate training may be provided for the new employee. Furthermore, health monitoring, condition monitoring, predictive analytics, just to name a few examples, may be improved, in that it may be more supported, more automated and more autonomous. The method may enable to obtain synthetic but super close drive parameters which can be used to train further drive ML models. There may be provided help to monitor best suitable drive parameters with respective ML model from a pool or repository of ML models. Further, the method may allow for lower operation and monitoring cost, it may enable to reduce overall commissioning time, it may enable to identify optimal drive parameters with reduced time, and/or it may enable to support and guide customers to deal with any future drive errors.

According to several examples of the present disclosure, the executing may comprise deploying a machine learning, ML, algorithm selected by the AI agent during the creating and/or the identifying. Additionally or alternatively, the executing may comprise deploying drive parameters selected by the AI agent during the creating and/or the identifying on the drive application and/or in commissioning of the drive application. Additionally or alternatively, the executing may comprise resolving a drive error related to the operation and/or the commissioning of the drive application. Additionally or alternatively, the executing may comprise managing a drive application in offline mode for a predetermined time.

Hence, increased efficiency and/or increased reliability is provided for several to be executed tasks.

According to several examples of the present disclosure, there is provided a control apparatus for a drive application, the control apparatus being configured to carry out the above-outlined method according to any of Figures 1, 2 or 3.

In more detail, according to various examples, a control apparatus for a drive application is disclosed, wherein the control apparatus is configured to carry out at least one of the methods as outlined above with reference to Figures 3 to 5. For instance, the control apparatus may comprise a processor and a memory for storing instructions, which, when executed by the processor, may cause the control apparatus to e.g. execute the method steps as outlined above with reference to Figures 3 to 5. For such execution, the control apparatus may comprise several functional portions, e.g. an obtaining portion to carry out a process according to Step 310 of Figure 3, and a training portion to carry out a process according to Step 320 of Figure 3. Additionally and/or alternatively, the control apparatus may comprise several functional portions, e.g. a using portion to carry out a process according to Step 410 of Figure 4, a prompting portion to carry out a process according to Step 420 of Figure 4, a providing portion to carry out a process according to Step 430 of Figure 4, a providing portion to carry out a process according to Step 440 of Figure 4, and a receiving portion to carry out a process according to Step 450 of Figure 4. Additionally and/or alternatively, the control apparatus may comprise several functional portions, e.g. an obtaining portion to carry out a process according to Step 510 of Figure 5, an obtaining portion to carry out a process according to Step 520 of Figure 5, an obtaining portion to carry out a process according to Step 530 of Figure 5, an accessing portion to carry out a process according to Step 540 of Figure 5, a creating portion to carry out a process according to Step 550 of Figure 5, an identifying portion to carry out a process according to Step 560 of Figure 5, and a providing portion to carry out a process according to Step 570 of Figure 5. Further, such portions may be understood to represent means for carrying out the certain function or to represent portions, which are configured to carry out the certain function.

The control apparatus is advantageous, in that it may enable to complete tasks, generate new tasks based on obtained results, and prioritize tasks in real-time. The control apparatus may further demonstrate the potential of Al-powered language models to autonomously perform tasks within various constraints and contexts. The control apparatus may further open a whole new world of applications which are currently done by specific analytics applications. Human expertise is not always required for drive analytical operation and may thus be used for other tasks. Hence, human expertise as a resource may be used more efficiently. For example, human expertise may be used to design ML models as well as to evaluate models and deployments of the LLM-, based generative AI agent. Moreover, human mistake may be at least reduced, optimization may be increased, and drive and gateway may be operated autonomously. An onboarding of a new employee may be improved since a more-appropriate training may be provided for the new employee. Furthermore, health monitoring, condition monitoring, predictive analytics, just to name a few examples, may be improved, in that it may be more supported, more automated and more autonomous. The control apparatus may enable to obtain synthetic but super close drive parameters which can be used to train further drive ML models. There may be provided help to monitor best suitable drive parameters with respective ML model from a pool or repository of ML models. Further, the control apparatus may allow for lower operation and monitoring cost, it may enable to reduce overall commissioning time, it may enable to identify optimal drive parameters with reduced time, and/or it may enable to support and guide customers to deal with any future drive errors.

According to several examples of the present disclosure, there is provided an (industrial) automation system (or (industrial) drive application system) comprising, as a first control apparatus, such control apparatus as outlined above, and, as a second control apparatus, such control apparatus as outlined above, the first control apparatus configured to carry out the method according to Figure 4, the second control apparatus configured to carry out the method according to Figure 5, and wherein the first control apparatus and the second control apparatus are communicatively connected.

Such automation system is advantageous, in that it may allow for lower operation and monitoring cost, may enable to reduce overall commissioning time, may enable to identify optimal drive parameters with reduced time, and/or may enable to support and guide customers to deal with any future drive errors. Human mistake may at least be reduced, automation may be increased, and human expertise as a resource may be used more efficiently.

According to several examples of the present disclosure, there is provided a computer-readable medium comprising instructions which, when executed by a computing system, cause the computing system to perform the method according to any of Figures 1, 2 and 3. The computer-readable medium may be transitory or non-transitory, volatile or non-volatile.

Such computer-readable medium is advantageous, in that it may allow for lower operation and monitoring cost, may enable to reduce overall commissioning time, may enable to identify optimal drive parameters with reduced time, and/or may enable to support and guide customers to deal with any future drive errors. Human mistake may at least be reduced, automation may be increased, and human expertise as a resource may be used more efficiently.

According to several examples of the present disclosure, there is provided a computer program product comprising instructions which, when executed by a computing system, enable or cause the computing system to perform the method according to any of Figures 1, 2 and 3.

Such computer program product is advantageous, in that it may allow for lower operation and monitoring cost, may enable to reduce overall commissioning time, may enable to identify optimal drive parameters with reduced time, and/or may enable to support and guide customers to deal with any future drive errors. Human mistake may at least be reduced, automation may be increased, and human expertise as a resource may be used more efficiently.

According to several examples of the present disclosure, there is provided a computing system configured to perform the method according to any of Figures 1, 2 and 3.

Such computing system is advantageous, in that it may allow for lower operation and monitoring cost, may enable to reduce overall commissioning time, may enable to identify optimal drive parameters with reduced time, and/or may enable to support and guide customers to deal with any future drive errors. Human mistake may at least be reduced, automation may be increased, and human expertise as a resource may be used more efficiently.

The methods as outlined above with reference to any of Figures 3, 4 and 5 may be computer implemented.

Any unit, module, circuitry or methodology described herein may be implemented using hardware, software, and/or firmware configured to perform any of the operations described herein. Hardware may comprise one or more processor cores, field-programmable gate arrays (FPGAs), application-specific integrated circuits (ASICs), application-specific standard products (ASSPs), system-on-a-chip systems (SOCs), complex programmable logic devices (CPLDs), etc. Software may be embodied as a software package, code, instructions, instruction sets and/or data recorded on at least one transitory or non-transitory computer readable storage medium. Firmware may be embodied as code, instructions or instruction sets and/or data hard-coded in memory devices (e.g., non-volatile memory devices).

If implemented in software, the functions can be stored on or transmitted over as one or more instructions or code on a computer-readable medium. Computer-readable media include computer-readable storage media. Computer-readable storage media can be any available storage media that can be accessed by a computer. By way of example, and not limitation, such computer-readable storage media can comprise FLASH storage media, RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal may be included within the scope of computer-readable storage media. Computer-readable media also includes communications media including any medium that facilitates transfer of a computer program from one place to another. A connection, for instance, can be a communications medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communications medium. Combinations of the above should also be included within the scope of computer-readable media.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features.

It has to be noted that embodiments of the invention are described with reference to different categories. In particular, some examples are described with reference to methods whereas others are described with reference to apparatus. However, a person skilled in the art will gather from the description that, unless otherwise notified, in addition to any combination of features belonging to one category, also any combination between features relating to different category is considered to be disclosed by this application. However, all features can be combined to provide synergetic effects that are more than the simple summation of the features.

While the invention has been illustrated and described in detail in the drawings and foregoing description, such illustration and description are to be considered exemplary and not restrictive. The invention is not limited to the disclosed embodiments. Other variations to the disclosed embodiments can be understood and effected by those skilled in the art, from a study of the drawings, the disclosure, and the appended claims.

The mere fact that certain measures are recited in mutually different dependent claims does not indicate that a combination of these measures cannot be used advantageously.

Any reference signs in the claims should not be construed as limiting the scope.

### Reference signs:

100: DriveAlAgent; 110: operator; 120: markup description and wrapper; 130: ML model repository; 140: drive parameters; 150: data engineers; 200: tools; 210: environmental conditions; 220: previous operational data with their drive parameters; 230: tools to handle noisy and incomplete data; 240: drive technical manuals.

## Claims

1. A method for obtaining an artificial intelligence, Al, agent (100) applicable on a drive application, the method comprising:
obtaining (S310) training data indicative of predetermined drive operational data related to predetermined drive applications and/or of predetermined drive parameters related to the predetermined drive applications;
training (S320) a large language model-, LLM-, based generative AI agent using the obtained training data to identify at least one of the following:
first drive parameters related at least partly to the drive application, and
relationships among the first drive parameters.

2. The method according to claim 1,
wherein the obtained training data comprise historic operational data and/or simulated operational data; and/or
wherein the obtained training data are further indicative of drive technical manuals indicative of second drive parameters related to the drive application;
wherein the training further comprises training to learn about at least one of: first relationships indicative of relationships among at least part of the first drive parameters based on the drive technical manuals, and second relationships indicative of relationships among at least part of the second drive parameters based on the drive technical manuals; and
wherein the training further comprises training to develop methods for identifying drive parameters related at least partly to the drive application based on at least one of the first relationships and the second relationships.

3. A method for achieving a goal for a drive application by use of an artificial intelligence, Al, agent, the method comprising:
using (S410) a large language model-, LLM-, based generative AI agent (100) obtained according to the method according to claim 1 or 2;
prompting (S420) the LLM-based generative AI agent (100) with the goal to be achieved for the drive application;
providing (S430) to the LLM-based generative AI agent (100) access to drive parameters related at least partly to the drive application and/or access to operational data related at least partly to the drive application;
providing (S440) to the LLM-based generative AI agent (100) access to predetermined tools and/or predetermined structured representations for analyzing the drive parameters; and
receiving (S450) a first output from the LLM-based generative AI agent (100), wherein the first output is indicative of at least one solution to achieve the goal and/or of at least an information indicating that the goal for the drive application is achieved.

4. The method according to claim 3, wherein the method further comprises:
providing feedback on the received first output to the LLM-based generative AI agent (100); and
based on the feedback, receiving a second output from the LLM-based generative AI agent (100), wherein the second output is indicative of an information indicating that the goal for the drive application is achieved.

5. The method according to claim 3 or 4, further comprising: providing to the LLM-based generative AI agent (100) direct access to the drive application and/or indirect access to the drive application.

6. The method according to any of claims 3 to 5, wherein the prompting comprises prompting the LLM-based generative AI agent (100) with the goal
to support in commissioning of the drive application; and/or
to identify optimal drive parameters for the drive application; and/or
to support in diagnosing drive errors in operation of the drive application; and/or
to identify an optimal machine learning, ML, model to be applied on the drive application.

7. The method according to any of claims 3 to 6, wherein the prompting comprises prompting the LLM-based generative AI agent (100) via a human-machine interface and/or via a prompt wizard interface and/or via LLM programming in automatic way.

8. The method according to any of claims 3 to 7, wherein the providing of access to the predetermined tools and/or predetermined structured representations comprises providing of access to at least one of:
at least one predetermined ML model and/or at least one predetermined motion analytics ML model,
gateway and/or drive,
environmental conditions,
a human-machine interface,
a database,
prompt templates
technical manuals,
previous and/or historic drive operational data and corresponding previous and/or historic drive parameters,
values provided by sensors and/or actuators related to the drive application and/or a drive system,
drive logs,
at least one of capabilities, parameters and operating instructions related to the predetermined tools and/or to a single tool among the predetermined tools,
tools for handling noisy and/or incomplete data, and
tools from motion analytics applications.

9. The method according to any of claims 3 to 8, wherein the providing of access to the predetermined tools comprises:
providing the access to describe at least one of the following for a tool among the predetermined tools:
a name of the tool,
a capability of the tool,
how to access the tool,
constraints while using the tool,
input and/or output parameters related to the tool, and their syntax, and
a ML model repository comprising ML models in markup language format.

10. A method for supporting achievement of a goal for a drive application by use of an artificial intelligence, Al, agent (100) obtained according to the method according to claim 1 or 2, the method comprising:
obtaining (S510) a prompt with the goal to be achieved for the drive application;
obtaining (S520) access to drive parameters generated by the drive application;
obtaining (S530) access to predetermined tools and/or predetermined structured representations for analyzing the drive parameters;
based on the obtained prompt and based on the obtained accesses, accessing (S540) tools and/or structured representations among the predetermined tools and/or the predetermined structured representations;
based on the accessing, creating (S550) planning for identifying at least one solution to achieve the goal;
identifying (S560) the at least one solution; and
based on a result of the identifying, providing (S570) an output indicative of the at least one solution and/or executing a solution among the at least one solution.

11. The method according to claim 10, wherein the executing comprises at least one of:
deploying a machine learning, ML, algorithm selected by the AI agent (100) during the creating and/or the identifying,
deploying drive parameters selected by the AI agent (100) during the creating and/or the identifying on the drive application and/or in commissioning of the drive application,
resolving a drive error related to the operation and/or the commissioning of the drive application, and
managing a drive application in offline mode for a predetermined time.

12. A control apparatus for a drive application, the apparatus being configured to carry out the method of claim 1 or 2, of any of claims 3 to 9, and/or of any of claims 10 or 11.

13. An automation system comprising a first control apparatus according to claim 12 and/or a second control apparatus according to claim 12 and/or a third control apparatus according to claim 12, the first control apparatus configured to carry out the method of any of claims 1 or 2, the second control apparatus configured to carry out the method of any of claims 3 to 9, the second control apparatus configured to carry out the method of any of claims 10 or 11, and wherein at least two among the first control apparatus, the second control apparatus and the third control apparatus are directly and/or indirectly communicatively connected.

14. A computer-readable medium comprising instructions which, when executed by a computing system, cause the computing system to perform the method of any of claims 1 or 2, of any of claims 3 to 9, and/or of any of claims 10 or 11.

15. A computer program product comprising instructions which, when executed by a computing system, enable or cause the computing system to perform the method of any of claims 1 or 2, of any of claims 3 to 9, and/or of any of claims 10 or 11.
